Europäisches Patentamt

European Patent Office

Office européen des brevets

(11) Veröffentlichungsnummer: **0 500 051 A2**

## EUROPÄISCHE PATENTANMELDUNG

(21) Anmeldenummer: **92102690.2**

(22) Anmeldetag: **18.02.92**

(51) Int. Cl.5: **G11B 33/00**

(30) Priorität: **18.02.91 DE 4104947**

(43) Veröffentlichungstag der Anmeldung:
**26.08.92 Patentblatt 92/35**

(84) Benannte Vertragsstaaten:
**AT BE CH DE DK ES FR GB GR IT LI LU MC NL PT SE**

(71) Anmelder: **Siemens Nixdorf Informationssysteme Aktiengesellschaft Fürstenallee 7 W-4790 Paderborn(DE)**

(72) Erfinder: **Murschall, Werner Birkenstrasse 11A W-4817 Leopoldshöhe(DE)**

(74) Vertreter: **Schaumburg, Thoenes & Englaender Mauerkircherstrasse 31 Postfach 86 07 48 W-8000 München 86(DE)**

(54) Einrichtung zum Sperren eines Aufnahmefaches für eine Datenträgereinheit, z. B. eine Diskette.

(57) Die Erfindung betrifft eine Einrichtung (2) zum Sperren der Öffnung (4) eines Aufnahmefaches für eine Datenträgereinheit, beispielsweise eine Datendiskette (8), umfassend ein bei der Betriebsstellung der Einrichtung (2) außen auf der Öffnung aufliegendes Abdeckelement (14), daran angeordnete, in die Öffnung eingreifende Zentriervorsprünge (20) und zumindest ein am Abdeckelement angeordnetes, zwischen einer Entriegelungsstellung und einer Verriegelungsstellung verstellbares Riegelelement (22) mit einem Riegelvorsprung (26), welcher in der Verriegelungsstellung eine im Inneren des Aufnahmefaches befindliche Kante hintergreift. Die Einrichtung hat wenigstens eine am Abdeckelement (14) angeordnete, bei der Betriebsstellung der Einrichtung bis in das Aufnahmefach hineinragende Stützzunge (30), die sich an eine im Inneren des Aufnahmefaches befindliche Fläche anlegt derart, daß die Einrichtung (2) in Eingriffsrichtung des Riegelvorsprungs (26) abgestützt wird. Die Stützzunge (30) ist beispielsweise für eine Anlage an der im Aufnahmefach befindlichen Datendiskette (8) ausgelegt. Bei leerem Aufnahmefach kann die Stützzunge (30) sich über ein Adapterstück auf dem Boden des Aufnahmefaches abstützen.

FIG. 1

EP 0 500 051 A2

Die vorliegende Erfindung betrifft eine Einrichtung der im Oberbegriff des Anspruches 1 genannten Art.

Vielfach ist es zweckmäßig oder erwünscht, ein derartiges Aufnahmefach zu sperren, um ein unbefugtes Entnehmen oder Einlegen einer Datenträgereinheit zu verhindern. Das gilt insbesondere für Datenverarbeitungsanlagen, bei denen Datendisketten mit vertraulichen oder geheimen Daten verwendet werden.

Durch das DE 87 13 331 U1 ist bereits eine Einrichtung der im Oberbegriff des Anspruches 1 genannten Art bekannt. Diese ist für ein spezielles Aufnahmefach ausgelegt, dessen Öffnung durch einen Schlitz mit einer verhältnismäßig großen Tiefe gebildet wird; der Zentriervorsprung ist dabei als Steg mit einer großen, der Tiefe der Öffnung entsprechenden Breite ausgebildet, so daß die Einrichtung in ihrer Betriebsstellung verhältnismäßig sicher gehalten wird.

Die inzwischen weitgehend genormten Aufnahmefächer für die unterschiedlichen Datenträgereinheiten haben jedoch im allgemeinen eine Öffnung, deren Tiefe wesentlich geringer ist als in der oben genannten Druckschrift dargestellt. Das gilt insbesondere für Aufnahmefächer moderner Diskettenlaufwerke, bei denen die Tiefe des Einführschlitzes so gering ist, daß die Zentriervorsprünge darin nicht sicher abgestützt werden. Die Folge davon ist, daß die Sperreinrichtung im Einführschlitz beispielsweise gekippt werden kann, so daß es möglich ist, durch geschickte Manipulation das Riegelelement, obwohl es eine Verriegelungsstellung einnimmt, außer Eingriff mit der Eingriffskante zu bringen und die Sperreinrichtung zu entfernen.

Es ist die Aufgabe der vorliegenden Erfindung, eine Einrichtung der im Oberbegriff des Anspruches 1 genannten Art zu schaffen, die mit einfachen konstruktiven und baulichen Mitteln bei allen Einsatzbedingungen in ihrer Betriebsstellung sicher gehalten wird, so daß ein Aushängen des seine Verriegelungsstellung einnehmenden Riegelelementes nicht möglich ist.

Diese Aufgabe ist erfindungsgemäß durch die im Anspruch 1 beschriebene Merkmale gelöst.

Die Sperreinrichtung ist mit einer bis in das Aufnahmefach hineinragenden Stützzunge versehen, die so angeordnet und ausgebildet ist, daß die Sperreinrichtung in Eingriffsrichtung des Riegelvorsprunges abgestützt wird. Dadurch wird verhindert, daß die Sperreinrichtung so gekippt oder verschoben wird, daß der Riegelvorsprung außer Eingriff mit der zugeordneten Eingriffskante gelangt.

Im allgemeinen Fall will man verhindern, daß eine im Gerät befindliche Datenträgereinheit entnommen wird. Für diesen Fall, in welchem sich also eine Datenträgereinheit im Aufnahmefach befindet, kann die Einrichtung erfindungsgemäß so ausgebildet sein, daß sich die Stützzunge an die im Aufnahmefach befindliche Datenträgereinheit anlegen kann.

Für den anderen Fall, daß ein Einführen einer Datenträgereinheit in das leere Aufnahmefach verhindert werden soll, ist gemäß einer anderen Ausgestaltung der Erfindung die Stützzunge so ausgelegt, daß sie sich an eine Innenwand des leeren Aufnahmefaches anlegen kann.

Um für beide oben beschriebene Fälle im wesentlichen mit einer einzigen Sperreinrichtung auszukommen, ist gemäß einer weiteren Ausgestaltung der Erfindung vorgesehen, daß an der für die Anlage an einer Datenträgereinheit bestimmten Stützzunge ein Adapterstück angesetzt werden kann, an welchem Füße angeordnet sind, die sich bei der Betriebsstellung der Einrichtung an eine Innenwand des Aufnahmefaches anlegen.

Das Adapterstück ist beispielsweise über an diesem ausgebildete Führungsschienen auf die Stützzunge aufschiebbar und mittels einer Schnappverbindung an diesem verriegelbar.

Bei einem anderen Ausführungsbeispiel der Erfindung ist außer der zur Anlage an einer im Aufnahmefach befindlichen Datenträgereinheit bestimmten Stützzunge wenigstens ein an der dem Aufnahmefach zugewandten Seite des Abdeckelementes angeordneter Stützfinger vorgesehen, welcher zwischen einer am Abdeckelement anliegenden, im wesentlichen in Flucht mit den Zentriervorsprüngen befindlichen Ruhestellung und einer von dem Abdeckelement abstehenden, in das Aufnahmefach ragenden Stützstellung schwenkbar ist, bei der der Stützfinger für einen Stützeingriff mit im Aufnahmefach befindlichen Stützflächen bereit ist. Wenn im Aufnahmefach eine Datenträgereinheit liegt, stützt sich die Sperreinrichtung über die Stützzunge an der Datenträgereinheit ab; wenn das Aufnahmefach leer ist, wird der Stützfinger in seine Stützstellung geschwenkt, so daß er in das leere Aufnahmefach ragt und sich an infolge des Fehlens einer Datenträgereinheit freiliegenden Stützflächen abstützen kann. Dieses zuletzt beschriebene Ausführungsbeispiel eignet sich insbesondere für ein Disketten-Aufnahmefach mit seitlichen Einschubschienen für die Aufnahme der Datenträgereinheit; in diesem Fall ist einer oder beiden Führungsschienen je ein Stützfinger zugeordnet, welcher bei seiner Stützstellung in eine der Führungsschienen eingreift, wenn die Einrichtung auf die Öffnung aufgelegt wird.

Gemäß einer weiteren Ausgestaltung der Erfindung ist das Riegelelement ein Riegelhaken mit einem im Abdeckelement drehbar gelagerten, im wesentlichen in der Ebene der Stützzunge in einer Ausnehmung derselben sich erstreckenden Schaft und einem am Schaftende quer abstehenden Hakenvorsprung, welcher bei einer Entriegelungsstellung im wesentlichen in der Ebene der Stützzunge liegt, in einer Verriegelungsstellung jedoch aus der Ebene der Stützzunge herausragt. Bei dieser Anordnung ist das Riegelelement bei seiner Entriegelungsstellung vollkommen innerhalb der Stützzunge aufgenommen, so daß es keinen gesonderten Platz im Aufnahmefach beansprucht; lediglich beim Verdrehen des Riegelelementes in seine Verriegelungsstellung tritt der Hakenvorsprung aus der Fläche der Stützzunge heraus und greift hinter die zugeordnete Verriegelungskante.

In vielen Fällen, beispielsweise bei Aufnahmefächern für Datendisketten oder für Videobänder, ist der Öffnung des Aufnahmefaches eine nach innen in eine Öffnungsstellung schwenkbare Verschlußklappe zugeordnet; in diesem Fall ist vorgesehen, daß die Sperreinrichtung Betätigungsflächen aufweist, die die Verschlußklappe beim Aufsetzen der Einrichtung auf die Öffnung nach innen mitnehmen und daß das Riegelelement für ein Hintergreifen der der Schwenkachse abgewandten freien Kante der nach innen geschwenkten Verschlußklappe ausgebildet ist. Um einerseits unterschiedliche Verschlußklappenbreiten ausgleichen zu können und andererseits in jedem Fall eine sichere Anlage des Abdeckelementes sicherzustellen, ist in weiterer Ausgestaltung der Erfindung vorgesehen, daß der Riegelhaken in Richtung der Schaftachse zum freien Schaftende hin gegen die Kraft einer Vorspannfeder verschiebbar angeordnet ist. Die Anordnung ist so getroffen, daß bei der Betriebsstellung und bei verriegeltem Riegelelement die Feder wenigstens etwas gespannt ist, so daß das Abdeckelement mit der Federkraft auf die Öffnung gezogen wird. Bei unterschiedlichen Verschlußklappenbreiten wird die Feder unterschiedlich vorgespannt.

Weitere Merkmale sowie Vorteile ergeben sich aus den Patentansprüchen, der Beschreibung und der Zeichnung, auf die bezüglich der Offenbarung aller nicht im Text beschriebenen Einzelheiten ausdrücklich verwiesen wird. In der Zeichnung sind mehrere Ausführungsbeispiele der Erfindung dargestellt, die im folgenden näher beschrieben werden. Es zeigen:

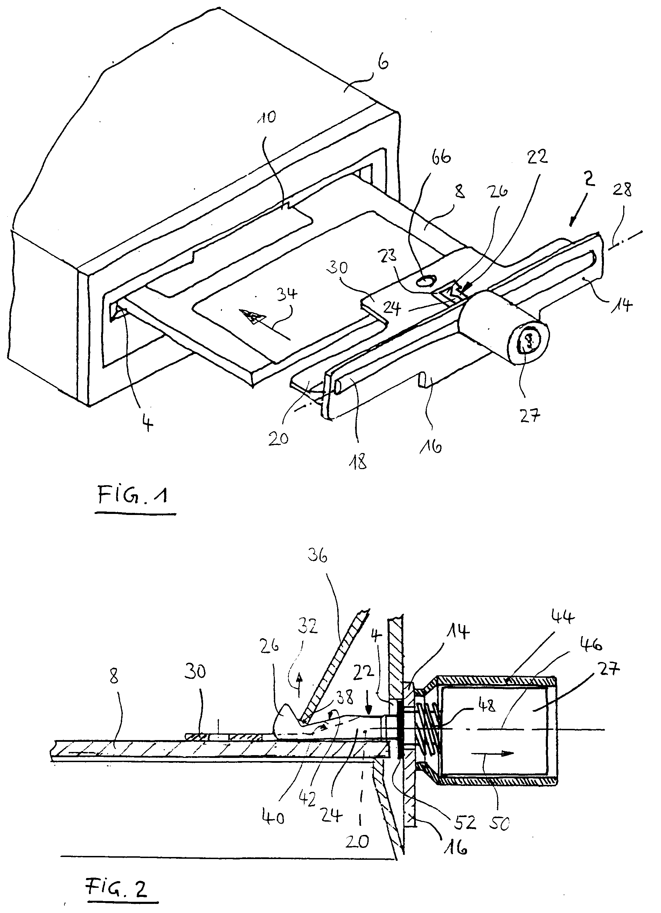

Figur 1
in einer perspektivischen Darstellung eine erfindungsgemäße Einrichtung in Verbindung mit einem Diskettenlaufwerk und einer Diskette;
Figur 2
einen Teillängsschnitt durch das Diskettenlaufwerk der Figur 1 mit eingelegter Diskette und mit einer Sperreinrichtung in Betriebsstellung;
Figur 3
in perspektivischer Darstellung die Sperreinrichtung der Figuren 1 und 2 sowie ein an dieses ansetzbares Adapterstück;
Figur 4

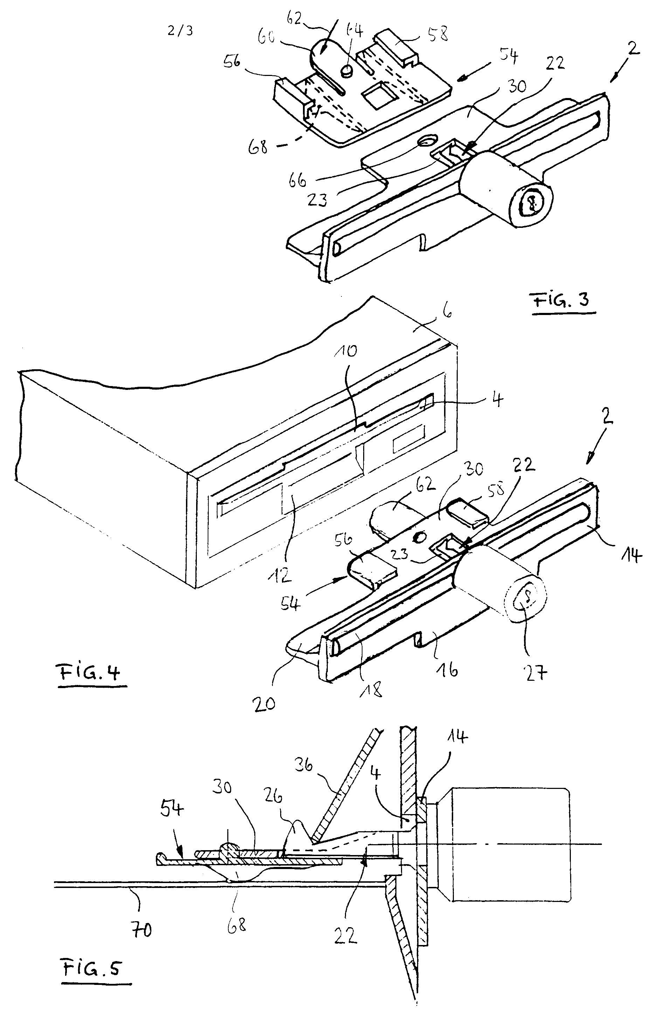

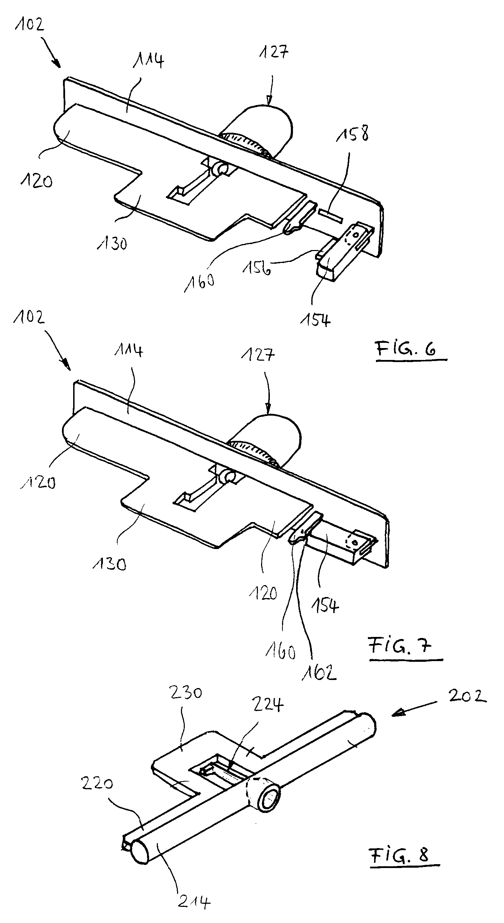

in perspektivischer Darstellung die Sperreinrichtung der Figur 3 mit angesetztem Adapterstück in Verbindung mit einem Diskettenlaufwerk;
Figur 5
in einem Teillängsschnitt das Diskettenlaufwerk der Figur 4 mit einer Sperreinrichtung in Betriebsstellung;
Figuren 6 und 7
ein anderes Ausführungsbeispiel einer Sperreinrichtung in unterschiedlichen Konstellationen;
Figur 8
schematisch ein weiteres Ausführungsbeispiel der Erfindung.

Die in Figur 1 perspektivisch dargestellte Sperreinrichtung 2 dient zum Sperren der Öffnung 4 eines im Diskettenlaufwerk 6 ausgebildeten Aufnahmefaches für eine Diskette 8. Die Öffnung 4 ist schlitzförmig ausgebildet und hat in der Mitte des oberen bzw. unteren Öffnungsrandes jeweils eine Griffmulde 10 bzw. 12 (siehe auch Figur 4), die in bekannter Weise ein Einführen und Entnehmen einer Diskette erleichtern.

Die Sperreinrichtung 2 umfaßt ein im wesentlichen plattenförmiges Abdeckelement 14, welches so ausgebildet ist, daß es die gesamte Öffnung 4 einschließlich der Griffmulden 10, 12 abdecken kann. Der obere Randbereich des Randelementes 14 ist zu diesem Zweck über dessen ganze Breite entsprechend weit hochgezogen, während im unteren Randbereich des Abdeckelementes 14 ein Laschenfortsatz 16 angeordnet ist, welcher sich bei der Betriebsstellung der Einrichtung 2 über die Griffmulde 12 legt.

Das Abdeckelement 14 ist durch eine an dessen Außenseite ausgebildete Verstärkungsrippe 18 verstärkt.

An der in Figur 1 dem Diskettenlaufwerk 6 zugewandten Seite des Abdeckelementes 14 ist ein stegartiger Zentriervorsprung 20 angeordnet, welcher dann, wenn die Einrichtung 2 ihre Betriebsstellung einnimmt, in die Öffnung 4 eingreift und die Einrichtung 2 in der Öffnung 4 zentriert.

Die Sperreinrichtung 2 umfaßt außerdem ein im wesentlichen senkrecht zum Abdeckelement 14 angeordnetes, bei auf die Öffnung 4 aufgesetzter Sperreinrichtung in das Aufnahmefach ragendes Riegelelement 22. Dieses besteht im wesentlichen aus einem um seine Längsachse drehbaren Schaft 24 und einem am freien Ende des Schaftes 24 angeordneten Riegelvorsprung 26. Das Riegelelement 22 ist über ein an der Außenseite des Abdeckelementes 14 angeordnetes Schloß 27 zwischen der in Figur 1 dargestellten Entriegelungsstellung und einer in Figur 2 dargestellten Verriegelungsstellung verdrehbar und in der Verriegelungsstellung sperrbar. Das Riegelelement 22 nimmt beim Aufsetzen der Sperreinrichtung 2 auf die Öffnung 4 seine in Figur 1 dargestellte Entriegelungsstellung ein; bei der Betriebsstellung des Sperrelementes 2 kann das Riegelelement 22 mittels eines nicht dargestellten Schlüssels in seine Verriegelungsstellung verdreht werden, bei der es hinter eine im Inneren des Aufnahmefaches ausgebildete Kante greift und die Sperreinrichtung 2 in ihrer Betriebsstellung festhält.

Wie bereits weiter vorne erwähnt wurde, ist die Tiefe der Öffnung 4 im allgemeinen so gering, daß das Sperrelement 2 insbesondere gegen Kippen um eine quer zum Riegelelement 22 verlaufende Querachse 28 nicht ausreichend gesichert ist. Dadurch besteht die Gefahr, daß der Riegelvorsprung 26 durch eine derartige Kippbewegung außer Eingriff mit der zugeordneten Kante kommt und dadurch seine Sperrfunktion nicht mehr erfüllt.

Um dieses zu verhindern, ist eine bei der Betriebsstellung der Sperreinrichtung 2 bis in das Aufnahmefach hineinragende Stützzunge 30 vorgesehen. Diese ist so ausgebildet, daß sie sich bei der Betriebsstellung der Sperreinrichtung 2 auf der Oberseite der in das Aufnahmefach eingelegten Diskette 8 abstützt, wie insbesondere Figur 2 erkennen läßt. Dadurch wird der Riegelvorsprung 26 in der Eingriffsrichtung 32 abgestützt, so daß er nicht außer Eingriff mit der zugeordneten Verriegelungskante kommen kann.

Die Stützzunge 30 hat eine sehr geringe Dicke, so daß sie oberhalb der Diskette 8 nur wenig Raum beansprucht. Bei herkömmlichen Diskettenlaufwerken wird die Diskette im allgemeinen in Richtung des Pfeiles 34 in das Aufnahmefach geschoben und sodann senkrecht zur Diskettenhauptebene nach unten gedrückt, so daß die Diskette hinter den Öffnungsrand einrastet. Dabei entsteht oberhalb der Diskette ein ausreichender Freiraum zum Einführen der Stützzunge 30.

Wie insbesondere Figur 2 erkennen läßt, ist der Öffnung 4 des Aufnahmefaches eine Verschlußklappe 36 zugeordnet, die nach innen in eine Öffnungsstellung verschwenkbar ist. Eine derartige Anordnung findet man im wesentlichen bei allen Diskettenlaufwerken, Videobandgeräten und bei den meisten Tonbandkassettengeräten. Die freie, der Schwenkachse abgewandte Kante 38 der Verschlußklappe 36 dient als Verriegelungskante, hinter die der Riegelvorsprung 26 des Riegelelementes 22 greift. Der Zentriervorsprung 20 ebenso wie der Schaft 24 des Riegelelementes 22 sind jeweils mit einer in Einschieberichtung abfallenden schrägen Betätigungsfläche 40 bzw. 42 versehen, die beim Montieren der Sperreinrichtung sicherstellt, daß die Verschlußklappe 36 so weit in ihre Öffnungsstellung mitgenommen wird, daß ein Riegeleingriff mit dem Riegelvorsprung 26 des Riegelelementes 22 zustandekommen kann.

Wie Figur 2 weiter erkennen läßt, ist das Schloß 27 in einer mit dem Abdeckelement 14 verbundenen Schloßhülse 44 in Richtung der Schloßachse 46 verschiebbar angeordnet. Das Schloß 27 wird durch eine zwischen diesem und der Außenseite des Abdeckelementes 14 angeordnete Druckfeder 48 in Richtung des Pfeiles 50 vorgespannt, wobei die Endstellung des Schlosses 27 durch einen auf dem Schaft 24 befestigten, sich an die Innenseite des Abdeckelementes 14 anlegenden Anschlagring 52 definiert ist. Die Anordnung ist so gewählt, daß das Abdeckelement 14 bei allen Betriebsbedingungen mit einer gewissen Federvorspannung auf die Öffnung 4 gedrückt wird. Außerdem ermöglicht diese Anordnung eine Anpassung des Riegelelementes 22 an Verschlußklappen 36 mit unterschiedlicher Klappenlänge.

Figur 3 zeigt eine Sperreinrichtung 2 mit einem zugeordneten Adapterstück 54, welches dann zur Anwendung kommt, wenn im Aufnahmefach des Diskettenlaufwerkes 6 keine Diskette angeordnet ist. Das Adapterstück 54 ist im wesentlichen plattenförmig ausgebildet. Es hat an seinen Seitenrändern Führungsschienen 56, 58, die auf die Seitenkanten der Stützzunge 30 aufschiebbar sind, wie insbesondere Figur 4 erkennen läßt. Am Adapterstück 54 ist eine federnde Lasche 60 angeordnet, die in Richtung des Pfeiles 62 ausgelenkt werden kann. Dadurch ist ein an der Lasche 60 angeordneter Schnappvorsprung 64 in die an der Stützzunge 30 ausgebildete Schnappausnehmung 66 einrastbar und aus dieser ausrastbar. Wie insbesondere Figur 5 erkennen läßt, sind an der Unterseite des Adapterstückes 54 Füße 68 ausgebildet, die sich bei leerem Aufnahmefach auf dem Fachboden 70 abstützen können. Auf diese Weise ist auch bei leerem Aufnahmefach ein sicherer Sitz der Sperreinrichtung 2 gewährleistet.

Die Figuren 6 und 7 zeigen ein Sperrelement 102, welches in wesentlichen Teilen den gleichen Aufbau hat wie die zuvor beschriebene Sperreinrichtung 2. Sie umfaßt insbesondere ein Abdeckelement 114, einen stegartigen Zentriervorsprung 120, eine Stützzunge 130 sowie ein in den Figuren 6 und 7 nicht dargestelltes Riegelelement der zuvor beschriebenen Art, welches über eine Schloßanordnung 127 zwischen einer Entriegelungsstellung und einer Verriegelungsstellung verstellbar ist.

An der bei montierter Sperreinrichtung dem Aufnahmefach zugewandten Seite des Abdeckelementes 114 ist ein Stützfinger 154 schwenkbar angeordnet. Er kann zwischen einer in der Figur 7 dargestellten, am Abdeckelement 114 anliegenden Ruhestellung, bei der er im wesentlichen in Flucht mit dem stegartigen Zentriervorsprung 120 angeordnet ist und die gleiche Funktion hat, und der in Figur 6 dargestellten Stützstellung, bei der er in das Aufnahmefach hineinragt, verstellt werden.

Die in der Figur 7 dargestellte Stellung wird gewählt, wenn sich eine Diskette im Aufnahmefach befindet. Dann stützt sich die Stützzunge 130 in der zuvor bereits beschriebenen Weise auf der Oberseite der Diskette ab. Die in der Figur 6 dargestellte Stellung wird gewählt, wenn das Aufnahmefach keine Diskette enthält. In diesem Fall stützt sich der Stützfinger 154 an geeigneten Stützflächen im Inneren des Aufnahmefaches ab.

In dem in den Figuren 6 und 7 dargestellten Ausführungsbeispiel ist der Stützfinger 154 so ausgebildet und angeordnet, daß er bei leerem Aufnahmefach in eine im Inneren dieses Aufnahmefaches angeordnete seitliche Führungsschiene eingreifen kann, die an sich zur Aufnahme der Diskette dient.

Der Stützfinger 154 ist mit einem Führungssteg 156 versehen, welcher bei der in der Figur 7 dargestellten Ruhestellung in einen am Abdeckelement 114 ausgebildeten Führungsschlitz 158 eingreift und dadurch den Stützfinger 154 stabilisiert. Außerdem ist dem Stützfinger 154 ein senkrecht auf der Innenseite des Abdeckelementes 114 stehender elastischer Riegel 160 mit einer Riegelnase 162 zugeordnet, die den Stützfinger 154 in seiner Ruhestellung hintergreift und in der Ruhestellung sichert.

Wie insbesondere die Figuren 1, 3 und 4 erkennen lassen, ist das Riegelelement 22 in einer der Form dieses Riegelelementes angepaßten Ausnehmung 23 aufgenommen. Bei der Entriegelungsstellung liegt der Riegelvorsprung 26 flach innerhalb der Ausnehmung 23, so daß das Riegelelement 22 nicht über die Stützzunge 30 vorsteht. Auf diese Weise kann das Riegelelement 22 in seiner Entriegelungsstellung das Einschieben der Stützzunge 30 in keinem Fall behindern. Bei der Verriegelungsstellung steht der Riegelvorsprung 26 aus der Ebene der Stützzunge 30 heraus, so daß er seine Verriegelungsfunktion wahrnehmen kann.

Die in Figur 8 dargestellte Sperreinrichtung 202 ist in wesentlichen Teilen gleich aufgebaut wie die zuvor beschriebenen Sperreinrichtungen 2 und 102. Sie umfaßt ein Abdeckelement 214, einen stegartigen Zentriervorsprung 220, eine Stützzunge 230 und ein in einer Ausnehmung 223 der Stützzunge 230 angeordnetes Riegelelement 222. Im Unterschied zu den zuvor beschriebenen Sperreinrichtungen ist das Abdeckelement 214 als Rundstab ausgebildet, dessen Durchmesser größer als die lichte Weite des Öffnungsschlitzes für das Aufnahmefach ist, so daß es sich auf die Längsränder des Öffnungsschlitzes auflegt.

**Patentansprüche**

1. Einrichtung zum Sperren der Öffnung eines Aufnahmefaches für eine Datenträgereinheit, beispielsweise eine Datendiskette, umfassend ein bei der Betriebsstellung der Einrichtung außen auf der Öffnung aufliegendes Abdeckelement, daran angeordnete, in die Öffnung eingreifende Zentriervorsprünge und zumindest ein am Abdeckelement angeordnetes, zwischen einer Entriegelungsstellung und einer Verriegelungsstellung verstellbares Riegelelement mit einem Riegelvorsprung, welcher in der Verriegelungsstellung eine im Inneren des Aufnahmefaches befindliche Kante hintergreift, **gekennzeichnet** durch wenigstens eine am Abdeckelement (14) angeordnete, bei der Betriebsstellung der Einrichtung bis in das Aufnahmefach hineinragende Stützzunge (30), die sich an eine im Inneren des Aufnahmefaches befindliche Fläche anlegt derart, daß die Einrichtung (2) in Eingriffsrichtung des Riegelvorsprungs (26) abgestützt wird.

2. Einrichtung nach Anspruch 1, dadurch **gekennzeichnet,** daß die Stützzunge (30) für eine Anlage an einer im Aufnahmefach befindlichen Datenträgereinheit (8) ausgelegt ist.

3. Einrichtung nach Anspruch 1, dadurch **gekennzeichnet,** daß die Stützzunge (30) für eine Anlage an eine bei leerem Aufnahmefach freiliegende Innenwand (70) des Aufnahmefaches ausgelegt ist.

4. Einrichtung nach Anspruch 1 oder 2, **gekennzeichnet** durch ein an der Stützzunge (30) befestigbares Adapterstück (54) mit Stützfüßen (68), die sich bei der Betriebsstellung der Einrichtung (2) an eine bei leerem Aufnahmefach freiliegende Innenwand (70) des Aufnahmefaches anlegen.

5. Einrichtung nach Anspruch 4, dadurch **gekennzeichnet,** daß das Adapterstück (54) im wesentlichen plattenförmig ausgebildet ist und an zwei einander abgewandten Seitenrändern jeweils Führungen (56, 58) hat, die auf Seitenkanten der Stützzunge (30) aufschiebbar sind.

6. Einrichtung nach Anspruch 4 oder 5, dadurch **gekennzeichnet,** daß an der Stützzunge (30) einerseits und an dem Adapterstück (54) andererseits zusammenwirkende, lösbare Schnappverbindungselemente (64, 66) ausgebildet sind, welche bei der Befestigung des Adapterstückes (54) an der Stützzunge (30) einschnappen.

7. Einrichtung nach Anspruch 1 oder 2, **gekennzeichnet** durch wenigstens einen an der dem Aufnahmefach zugewandten Seite des Abdeckelementes angeordneten Stützfinger (154), welcher zwischen einer am Abdeckelement (114) anliegenden, im wesentlichen in Flucht mit den Zentriervorsprüngen (120) befindlichen Ruhestellung und einer von dem Abdeckelement (114)abstehenden, in das Aufnahmefach ragenden und für einen Stützeingriff mit im Aufnahmefach befindlichen Stützflächen bereiten Stützstellung schwenkbar ist.

8. Einrichtung nach Anspruch 7, für ein Aufnahmefach mit seitlichen Einschubschienen für die Datenträgereinheit, dadurch **gekennzeichnet,** daß ein oder zwei jeweils in einem seitlichen Endbereich des Abdeckelementes (114) angeordnete Stützfinger (154) vorgesehen sind und daß jeder Stützfinger (154) so angeordnet und dimensioniert ist, daß er bei seiner Stützstellung beim Ansetzen der Einrichtung (102) in eine der Einschubschienen eingreift.

9. Einrichtung nach einem der Ansprüche 1 bis 8, dadurch **gekennzeichnet,** daß das Riegelelement (22) ein Riegelhaken mit einem im Abdeckelement drehbar gelagerten, im wesentlichen in der Ebene der Stützzunge in einer Ausnehmung derselben sich erstreckenden Schaft (24) und einem am Schaftende quer abstehenden Hakenvorsprung (26) ist, welcher bei einer Entriegelungsstellung im wesentlichen in der Ebene der Stützzunge (30) liegt, in einer Verriegelungsstellung jedoch aus der Ebene der Stützzunge (30) herausragt.

10. Einrichtung nach einem der Ansprüche 1 bis 9, für eine Öffnung mit einer nach innen in eine Öffnungsstellung schwenkbaren Verschlußklappe (36), dadurch **gekennzeichnet,** daß die Einrichtung (2) Betätigungsflächen (40, 42) aufweist, durch die die Verschlußklappe (36) beim Ansetzen der Einrichtung an die Öffnung (4) nach innen geschwenkt wird, und daß das Riegelelement (22) für ein Hintergreifen der der Schwenkachse abgewandten freien Kante (38) der nach innen geschwenkten Verschlußklappe (36) ausgebildet ist.

11. Einrichtung nach Anspruch 9 oder 10, dadurch **gekennzeichnet,** daß der Riegelhaken (22) in Richtung der Schaftachse zum freien Schaftende hin gegen die Kraft einer Vorspannfeder (48) verschiebbar angeordnet ist.

12. Einrichtung nach einem der Ansprüche 1 bis 11, für ein Aufnahmefach für eine Datendiskette, die parallel zu ihrer Hauptebene in das Aufnahmefach geschoben und danach im wesentlichen senkrecht zur Hauptebene in eine Arbeitsstellung bewegt wird, dadurch **gekennzeichnet,** daß die Stützzunge (30) für eine Anlage an der bezüglich der letzteren Bewegung oberen Seite der Datendiskette (8) ausgelegt ist.

13. Einrichtung nach einem der Ansprüche 1 bis 14, für eine im wesentlichen schlitzförmige Öffnung, dadurch **gekennzeichnet,** daß das Abdeckelement (202) ein Rundstab ist, dessen Durchmesser größer als die lichte Breite zwischen den Längsrändern der schlitzförmigen Öffnung ist.

FIG. 1

FIG. 2

2/3

FiG. 3

FiG. 4

FiG. 5

FIG. 6

FIG. 7

FIG. 8